# EUROPEAN PATENT SPECIFICATION

(11) **EP 2 697 549 B1**
(45) Date of publication and mention of the grant of the patent: **01.07.2015**
(21) Application number: 12717898.6
(22) Date of filing: 12.04.2012
(51) Int. Cl.: F16L 3/237

(54) **PIPELINE BUNDLING ASSEMBLY, MOULD ASSEMBLY, AND METHOD FOR BUNDLED PLACEMENT OF PIPELINES**
ROHRLEITUNGBÜNDELUNGSANORDNUNG, FORMANORDNUNG UND VERFAHREN FÜR DIE GEBÜNDELTE PLATZIERUNG VON ROHRLEITUNGEN
ENSEMBLE DE MISE EN FAISCEAU DE CONDUITES, ENSEMBLE MOULE ET PROCÉDÉ PERMETTANT DE PLACER DES CONDUITES EN FAISCEAU

(30) Priority: 15.04.2011 NL 2006613
(43) Date of publication of application: 19.02.2014
(73) Proprietor: Lankhorst Engineered Products B.V., 8607 AD Sneek (NL)
(72) Inventor: VAN BELKOM, Arnoldus, NL-8843 KJ Spannum (NL)
(74) Representative: Jansen, Cornelis Marinus
(86) International application number: PCT/NL2012/050240
(87) International publication number: WO 2012/141583

(56) References cited:
- GB-A- 2 250 079
- US-A- 3 856 246
- US-A1- 2006 096 197

## Description

The invention relates to a pipeline bundling assembly for holding a first pipeline and a second pipeline parallel at a distance from each other, comprising a basic element and a covering element, which basic element comprises a first enveloping side for partly enveloping the first pipeline in circumferential direction of the first pipeline, and a second enveloping side located opposite the first enveloping side for partly enveloping the second pipeline in circumferential direction of the second pipeline, and which covering element comprises a third enveloping side for partly enveloping the second pipeline in circumferential direction of the second pipeline, wherein the covering element can be brought into a covering condition connected with the basic element by interlocking therewith, in which covering condition the basic element and the covering element face each other by the second enveloping side and the third enveloping side, respectively, and wherein the assembly can take an operative condition, in which operative condition the first pipeline and the second pipeline are held parallel at a distance from each other in that the covering element is in the covering condition and the first pipeline is partly enveloped by the first enveloping side, and the second pipeline is partly enveloped by the second enveloping side and is partly enveloped by the third enveloping side.

The invention also relates to a mould assembly for manufacturing such a pipe line bundling assembly.

The invention further relates to a method for placement under water of at least a first pipeline and a second pipeline, bundled at a parallel distance from each other, with the aid of several such pipeline bundling assemblies.

Such a pipeline bundling assembly, often indicated as "piggyback" system is known from, for instance, WO03/074916A1.

Laying bundled pipes on or in the bottom of a water with a plurality of such assemblies is mostly done from a vessel present on the water surface. Aboard the vessel, the assemblies are provided on the respective first pipeline and second pipeline in order to form a bundled pipeline. The provided assemblies are each time, viewed in longitudinal direction of the bundled pipeline, at a distance from each other. Already bundled parts of the pipeline, onto which the assemblies have already been provided, are lowered from the vessel towards the bottom of the water. Simultaneously, aboard the vessel, assemblies are provided on parts of the respective pipeline that still have to be bundled.

Owing to piggyback systems, several pipelines can be laid simultaneously by means of a single, bundled laying operation, which saves costs and is beneficial to the reliability of the operation.

When providing such an assembly, usually, per assembly, one or more fastening straps are used which, in cross sectional view through the bundled pipeline, run around the outside of the assembled construction of the first pipeline, the second pipeline and the assembly. Most often, use is also made of a tensioning construction for firmly tensioning the applied fastening straps. Such an applied fastening strap holds the first pipeline and the covering element near the basic element. Thus, such an applied fastening strap holds the second pipeline extending between the covering element and the basic element near the first pipeline.

The use of such known assemblies has a few drawbacks. During the provision of an assembly, for instance, there is a stage where the covering element is positioned on the basic element, with the second pipeline already located between the basic element and the covering element, but a fastening strap has not yet, or not yet completely, been applied. During this stage, the covering element is not yet held in place by a fastening strap, and the covering element can inadvertently come loose from the basic element. In such a case, the covering element must be repositioned onto the basic element. This is not beneficial to simple and rapid placement of the assembly. Especially as laying a bundled pipeline requires the provision of a very large number of assemblies, this has a relatively great adverse effect on the speed of the pipe laying operation and the associated cost of labour of the personnel.

But also, a covering element may come loose from the basic element when the assembly, already provided on a bundled part of the pipeline, is being lowered from the vessel, or when the assembly is already at its destination near the bottom of the water, provided on the already lowered pipeline. This may for instance occur when a fastening strap has not been stretched tightly enough at a particular assembly. When a covering element comes loose, often, the basic element too comes loose. Dislodged assemblies then lose their function and end up in the environment uncontrolled, for instance, washing up on the shore. Partly for these reasons, high requirements are set to the quality of the fastening straps and, if applicable, to the associated tensioning constructions. This required high quality has a strong cost-increasing influence on laying bundled pipelines. The costs of the fastening straps and the tensioning construction are often higher than those of the basic elements and covering elements. In this context, it is further noted that in many cases, the fastening straps and tensioning constructions must be highly durable, which further increases costs. The fact is that the assemblies can also come loose as a result of long term corrosion of the fastening straps and/or the tensioning construction on the seafloor.

A further drawback of the known pipeline bundling assemblies is elucidated as follows. In certain bundled pipe placement operations, it is important that the first and second pipelines held at a distance from each other by the bundling assemblies, as desired, can or cannot move relative to each other in longitudinal direction. The fact is that in some pipe placement operations, it may be desired that the first and second pipeline can move relative to each other in longitudinal direction over the entire length of the bundled pipeline. Conversely, in other pipe placement operations, it maybe desired that the first and second pipeline cannot move relative to each other in longitudinal direction over the entire length of the bundled pipeline. It may also be desired that the first and second pipeline at some points and/or partial sections in longitudinal direction of the bundled pipeline can move relative to each other in longitudinal direction and at other points and/or partial sections in longitudinal direction of the bundled pipeline cannot move relative to each other in longitudinal direction.

In this context, a drawback of the pipeline bundling assembly known from the above-mentioned document WO03/074916A1 ("piggyback system") is that this known piggyback system does not reliably meet the need that in certain bundled pipe placement operations, the first and second pipelines held at a distance from each other by the bundling assemblies, as desired, can or cannot be moved relative to each other in longitudinal direction. With the system known from WO03/074916A1, in principle, the tensile force of the tensioning construction of the fastening straps can be varied. However, if with a view to the relative movability of the first and second pipeline, a limited tensile force were to be utilized, the entire placed piggyback system would become movable in longitudinal direction of the bundled pipeline, with respect to both the first pipeline and the second pipeline. This is extremely undesirable because as a result, the predefined desired mutual distances between different piggyback systems in longitudinal direction of a specific bundled pipeline would be lost, so that the first and second pipeline are no longer reliably held at a parallel distance from each other by the placed piggyback systems.

It is further noted that, from US2006/096197A1, an assembly is known for bundled placement of relatively small conduits in concrete covering floors, walls, ceilings, or the like, of buildings. Further, from US3856246A, an assembly is known for holding pipes at a parallel distance from each other prior to placement of the pipes in the ground or in concrete. The known assemblies from these two publications US2006/096197A1 and US3856246A have drawbacks similar to those as described hereinabove for the assembly known from WO03/074916A1.

It is an object of the invention to provide a solution according to which placement of a bundled pipeline under water can be carried out easily, rapidly, reliably, and inexpensively, while at the same time it is possible to arrange that the pipelines held at a parallel distance from each other by the bundling assemblies, as desired, can or cannot be made to move relative to each other in longitudinal direction.

To that end, the invention provides a pipeline bundling assembly according to claim 1, a mould assembly according to claim 11, and a method according to claim 12. Specific embodiments of the invention are laid down in the dependent claims.

In a pipeline bundling assembly according to the invention, the basic element and the covering element comprise mutually cooperating snap connection elements for bringing the covering element in the covering condition by means of snap connection and for maintaining the covering condition in the operative condition of the assembly.

Such mutually cooperating snap connection elements comprise at least one resilient portion of at least one of the two elements of the assembly. With the aid of spring force of the resilient portion, a hooking connection can be effected between the two elements mentioned in that the resilient portion, which forms part of one of the two elements, hooks into a hooking structure of the other one of the two elements, One or more of such resilient portions can form part of the basic element and/or of the covering element. It is also possible that optionally, the hooking structure of the other one of the two elements also comprises a resilient portion of the other one of the two elements.

Owing to the mutually cooperating snap connection elements, personnel can readily and rapidly, by means of snap connection, snap a covering element to the basic element while the second pipeline is situated between the basic element and the covering element. The.snapped-tight covering element then cannot inadvertently come loose from the basic element, so that one or more fastening straps can be provided without further delay.

The fact that the snapped-tight covering element cannot inadvertently come loose from the basic element can also be utilized by applying shorter, and therefore cheaper, fastening straps. The fact is that with a snapped-tight covering element, it is no longer necessary that a fastening strap runs around the outside of a covering element in covering condition. In fact, fastening strap needs to be used only for fixing the basic element relative to the first pipeline. The fact is that the basic element is already fixed relative to the second pipeline by means of the covering element snapped to the basic element. In other words, in an advantageous embodiment of the invention, the fastening strap can be provided such that the provided fastening strap, which fixes the respective pipeline bundling assembly relative to the first pipeline, does not surround the second pipeline.

The fact that the snapped-tight covering element cannot inadvertently come loose from the basic element can further be utilized in certain pipe laying operations by applying less durable and hence cheaper fastening straps. The fact is that in certain pipe laying operations, it is not necessary that pipelines, once laid, have to be held together by the pipeline bundling assemblies on or in the seabed. From that viewpoint, therefore, in certain operations the fastening straps applied during the pipe laying operations may be allowed to corrode in the course of time. However, to prevent the bundling assemblies from coming loose from the pipelines in the course of time and ending up in the environment uncontrolled (washing ashore, for instance), in such operations too, usually, durable, hence relatively expensive, fastening straps are still utilized. When using assemblies according to the invention, it is no longer necessary in such pipe laying operations to use such relatively expensive fastening straps. This is because assemblies according to the invention, even if the fastening straps corrode, remain fastened to the second pipeline in that the covering element and the basic element are snapped together.

Further, the pipeline bundling assembly according to the invention is designed to permit the covering element to be brought, as desired, from at least two different placement conditions of the covering element relative to the basic element, by means of said snap connection, into the covering condition, which is realized in that a first outer surface structure of the basic element and a second outer surface structure of the covering element on sides of the basic element and of the covering element facing each other in the covering condition are each provided with at least one elevation and at least one recess, which first outer surface structure and second outer surface structure in said covering condition, through different mutual orientations of the basic element and the covering element, can, as desired, abut against each other in different manners such that:
- the elevation of the first outer surface structure abuts against the elevation of the second outer surface structure, in which case a first placement condition of said placement conditions occurs, or
- the elevation of the first outer surface structure abuts against the recess of the second outer surface structure, in which case a second placement condition of said placement conditions occurs,
wherein, in the first placement condition and in the second placement condition, respectively, a first intermediate space between the second enveloping side and the third enveloping side, and a second intermediate space between the second enveloping side and the third enveloping side are defined in a condition in which the covering element in the respective placement condition is pressed as far as possible in the direction towards the basic element against the basic element, and wherein the first intermediate space in the first placement condition is greater than the second intermediate space in the second placement condition.

A few advantages thereof are elucidated as follows. As described hereinabove, in certain bundled pipe placement operations, it is important that the first and second pipelines held at a parallel distance from each other by the bundling assemblies, as desired, can or cannot move relative to each other in longitudinal direction. Locally allowing or not allowing such relative axial movements of.the first and second pipeline can be achieved by having a bundling assembly according to the invention in its operative condition engage clampingly, or not so, the second pipeline which, in the covering condition of the covering element, is enveloped by the second enveloping side of the basic element and the third enveloping side of the covering element. With a bundling assembly according to the invention, personnel who provide the bundling assembly can choose in situ whether to bring the covering element in its covering condition in the first or in the second placement condition. The first placement condition can be selected here to have the bundling assembly in its operative condition engage the second pipeline in a non-clamping manner, while the second placement condition can be selected to have the bundling assembly in its operative condition engage the second pipeline in a clamping manner.

Hence, with a pipeline bundling assembly according to the invention, only one type of covering element and one type of basic element needs to be manufactured and made available for realising the two different placement conditions. Two types of covering elements and/or two types of basic elements are therefore not needed for this. This not only entails a saving on manufacturing costs, but also provides various other advantages, especially of a logistic nature. For instance, amounts of only one type of covering element and one type of basic element need to be in stock for a pipe laying operation. There is no need to plan what percentages of one or both respective elements in a second type would have to be in stock aboard the vessel used for the pipe laying operation.

The basic element and the covering element of a pipeline bundling assembly according to the invention can be simply manufactured with outer surface structures as mentioned. Further, the at least two different placement conditions can be reliably realized with the outer surface structures mentioned.

In a preferred embodiment of the invention, the mutual orientation of the basic element and the covering element in the first placement condition differs at least by an angular displacement of 180° about a straight line from this mutual orientation in the second placement condition. As a result, bringing the covering element into the covering condition, as desired, from the first and second placement condition can easily be carried out by personnel, while the 180-degree angular displacement is also a well-distinguishable operation for the personnel.

Preferably, the assembly has a ready for use condition in which the basic element and the covering element are completely separate from each other and, starting from this ready for use condition, the covering condition can be obtained by merely putting the snap connection elements mentioned into operation. In comparison with pipeline bundling assemblies where the basic element and the covering element are already connected with each other in some manner or other in the ready for use condition, this preferred embodiment offers the advantages that the basic element and the covering element each have a relatively simple shape and are each relatively simple to manufacture. A further advantage is that if a basic element or a covering element of an assembly according to the invention should break prior to being applied, it is not the entire assembly that is lost because the other, unbroken element can be used in combination with a replacement for the broken element.

In principle, the basic element and the covering element can be manufactured from various materials. Preferably, the basic element and/or the covering element is/are manufactured from plastic, by means of, for instance, injection moulding in a mould/moulds. A suitable material for manufacturing the basic element and/or the covering element is, for instance, a foamed plastic, and more particularly a Polyethylene (PE), or, for instance, a highly impact resistant PE composition manufactured by injection moulding in a mould. As a result, the respective element is not only light, but can also be manufactured from reused plastic, which is environmentally friendly. For instance, the basic element and/or the covering element can be manufactured from Low Density Polyethylene (LDPE). Another suitable material for the basic element and/or the covering element is polypropylene (PP). Such a material also has a high dimensional stability at higher temperatures and can be utilized with, for instance, pipelines through which a fluid at increased temperature is transported.

In further preferred embodiments of the invention, the snap connection elements comprise at least one local resilient portion of the basic element manufactured integrally with the basic element, which resilient portion of the basic element functions as a local spring with respect to other portions of the basic element located next to the resilient portion of the basic element, and through deformation occurring under its spring force can be brought into the covering condition interlocking with the covering element and/or the snap connection elements comprise at least one local resilient portion of the covering element manufactured integrally with the covering element, which resilient portion of the covering element functions as a local spring with respect to other parts of the covering element located next to the resilient portion of the covering element, and through deformation occurring under its spring force can be brought into the covering condition interlocking with the basic element. The local resilient portion mentioned can simply and inexpensively be manufactured integrally with the respective element by means of, for instance, injection moulding in a mould. Further, what is prevented through this integral manufacture is that prior to or during assembly of the pipeline bundling assembly, parts could get lost or could come loose in underwater operative condition. This increases efficiency and reliability. The resilient portion of the basic element and/or the resilient portion of the covering element can be manufactured from Polyethylene (PE), more particularly from Low Density Polyethylene (LDPE).

As mentioned, the invention is also embodied in a mould assembly for manufacturing a pipeline bundling assembly according to the invention, comprising a first mould and a second mould which are especially designed for manufacturing the basic element and the covering element, respectively, of the pipeline bundling assembly. Each of these moulds therefore has internal walls which define a mould cavity of the respective mould, which mould cavity corresponds with the shape of the respective element that can be manufactured by the respective mould.

In the following, the invention is further elucidated with reference to the schematic figures in the appended drawings.
Fig. 1A shows an example of an embodiment of a basic element of a pipeline bundling assembly according to the invention in a perspective view on the second enveloping side of the basic element.
Fig. 1B shows the basic element of Fig. 1A again, however, in a perspective view on the first enveloping side of the basic element.
Fig. 2A shows an example of an embodiment of a covering element cooperating with the basic element of Figures 1A and 1B of the respective pipeline bundling assembly according to the invention in a first perspective view of the covering element.
Fig. 2B shows the covering element of Fig. 2A again, however, in a perspective view of the third enveloping side of the covering element.
Fig. 3 shows, in perspective view, the basic element of Figures 1A and 1B and the covering element of Figures 2A and 2B again, this time in an operative condition of the respective pipeline bundling assembly according to the invention, in which the covering element has been brought into its covering condition in a particular placement condition with respect to the basic element.
Fig. 4 shows the same situation as Figure 3, however, in an operative condition of the respective pipeline bundling assembly, in which the covering element has been brought into its covering condition in a placement condition other than that of Fig. 3 with respect to the basic element.
Fig. 5A shows a view according to the arrow V shown in Fig. 3 on a cross-sectional plane P shown in Fig. 3 through the pipeline bundling assembly shown in Fig. 3.
Fig. 5B shows an enlargement of the detail indicated in Fig. 5A with circle V-B.
Fig. 6A shows a view according to the arrow VI shown in Fig 4 on a cross sectional plane Q shown in Fig. 4 through the pipeline bundling assembly shown in Fig. 4.
Fig. 6B shows an enlargement of the detail indicated in Fig. 6A with circle VI-B.

The Figures show a pipeline bundling assembly 1 according to the invention. The basic element and the covering element of the assembly 1 are indicated with reference numerals 2 and 3, respectively. The first enveloping side and the second enveloping side of the basic element 2 are indicated with reference numeral 21 and 22, respectively. The third enveloping side of the covering element 3 is indicated with the reference numeral 23.

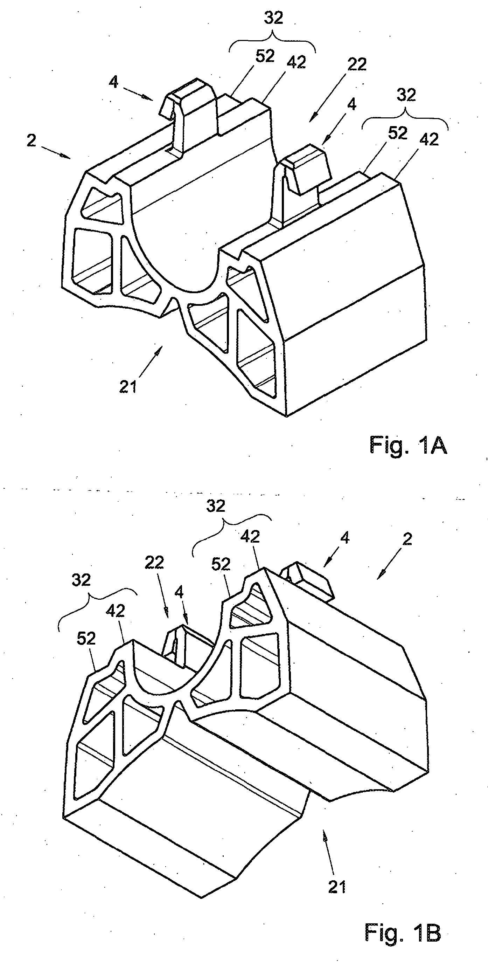

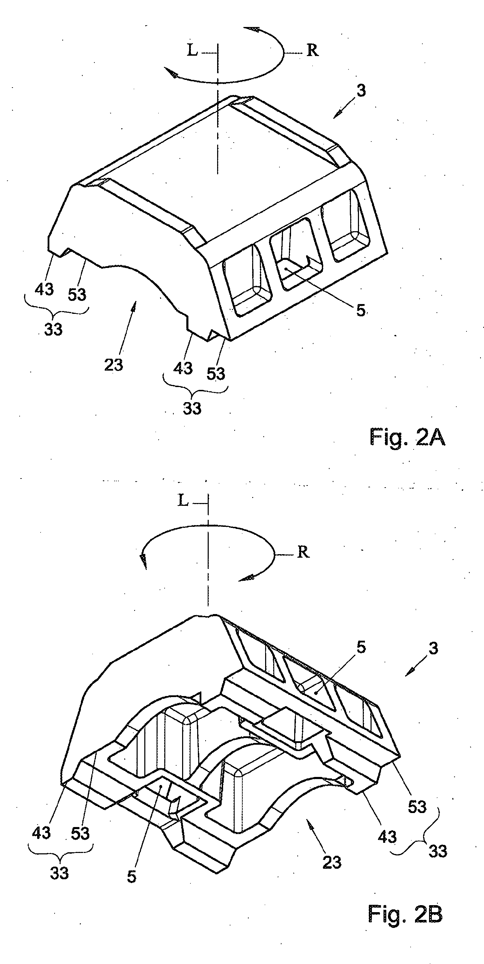

The assembly 1 has a ready for use condition, in which the basic element 2 and the covering element 3 are completely separate from each other, as shown in Figures 1A, 1B, 2A and 2B.

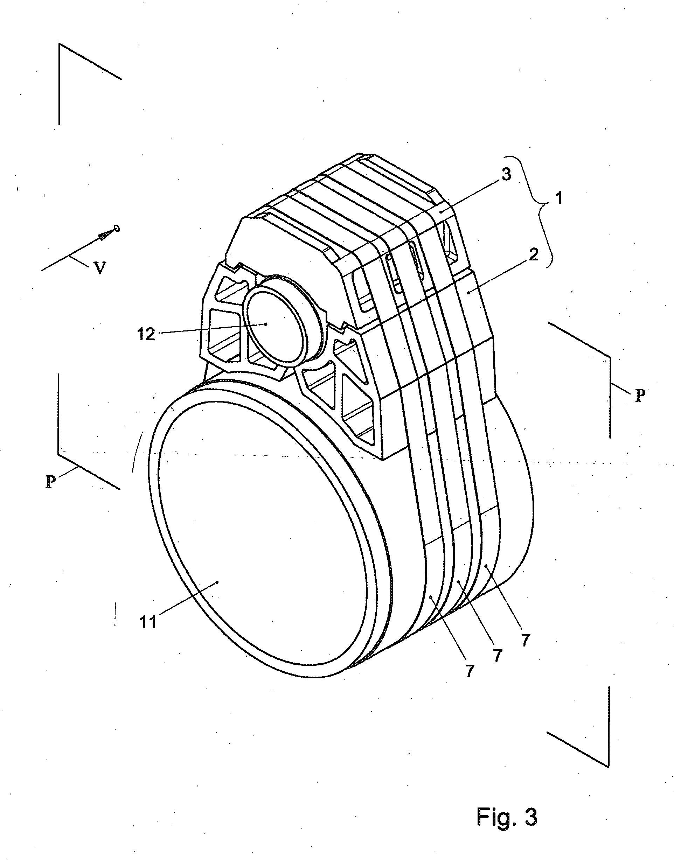

In Figures 3, 4, 5A, 5B, 6A and 6B, the covering element 3 is shown in its covering condition. In this covering condition, the basic element 2 and the covering element 3 face each other by the second enveloping side 22 and the third enveloping side 23, respectively. More particularly, in the Figures 3, 4, 5A, 5B, 6A and 6B, the assembly 1 is shown in its operative condition. In this operative condition, a first pipeline 11 and a second pipeline 12 are held parallel at a distance from each other. The first pipeline 11 is here partly enveloped by the first enveloping side 21 of the basic element 2 and the second pipeline 12 is partly enveloped by the second enveloping side 22 of the basic element 2. The second pipeline 12 is here also partly enveloped by the third enveloping side 23 of the covering element 3.

In the Figures 3, 4, 5A, 5B, 6A and 6B, the covering element 3 has been brought into the covering condition with the basic element 2 by means of snap connection. This covering condition is maintained in the operative condition by means of the snap connection. The snap connection is realised in that the basic element 2 and the covering element 3 comprise mutually cooperating snap connection elements 4 and 5. Starting from the ready for use condition of the assembly 1 (see Figures 1A, 1B, 2A and 2B), the covering condition of the covering element 2 shown in the Figures 3, 4, 5A, 5B, 6A and 6B can be obtained by merely putting the snap connection elements 4 and 5 into operation.

In the example shown, the mutually cooperating snap connection elements comprise two resilient snap fingers 4 of the basic element 2 and two receiving spaces 5 of the covering element 3. Starting from the ready for use condition of the assembly 1 in which the basic element 2 and the covering element 3 are still completely separate from each other, the covering element 3 can be positioned on the basic element 2 such that the snap fingers 4 of the basic element 2 are at the location of the receiving spaces 5 of the basic element 2. Then, the covering element 3 can be pressed firmly against the basic element 2. As a result, each of the snap fingers 4 gives way laterally under its spring force and a respective snap finger 4 penetrates the associated respective receiving space 5, whereupon eventually a laterally projecting hook portion of the respective snap finger 4 comes to hook behind an edge portion of the respective receiving space 5. Through the respective design and manner of hooking together of the snap connection elements, the covering element 3, once it has snapped tight, can no longer come loose unintentionally from the basic element 2 under any relevant operative conditions. Only a releasing action planned by a user, whereby locally dosed great forces are applied to the assembly, can effect the release. It is noted that such an assembly, instead of two snap fingers, can also comprise various other numbers of such snap fingers, or differently shaped snap elements.

The embodiment of the assembly 1 shown is eminently suitable for manufacture of the basic element 2 and the covering element 3 from plastic, with the aid of, for instance, injection moulding in moulds, while the snap fingers can be integrally manufactured with the respective element.

In the example shown, further, a number of fastening straps 7 are applied. Such an applied fastening strap 7, viewed in cross section through the bundled pipeline, runs around the outside of the assembled construction of the first pipeline 11, the second pipeline 12 and the assembly 1, and holds the first pipeline 11 and the covering element 3 near the basic element 2. Thus, such an applied strap 7 holds the second pipeline 12 extending between the covering element 3 and the basic element 2 near the first pipeline 11.

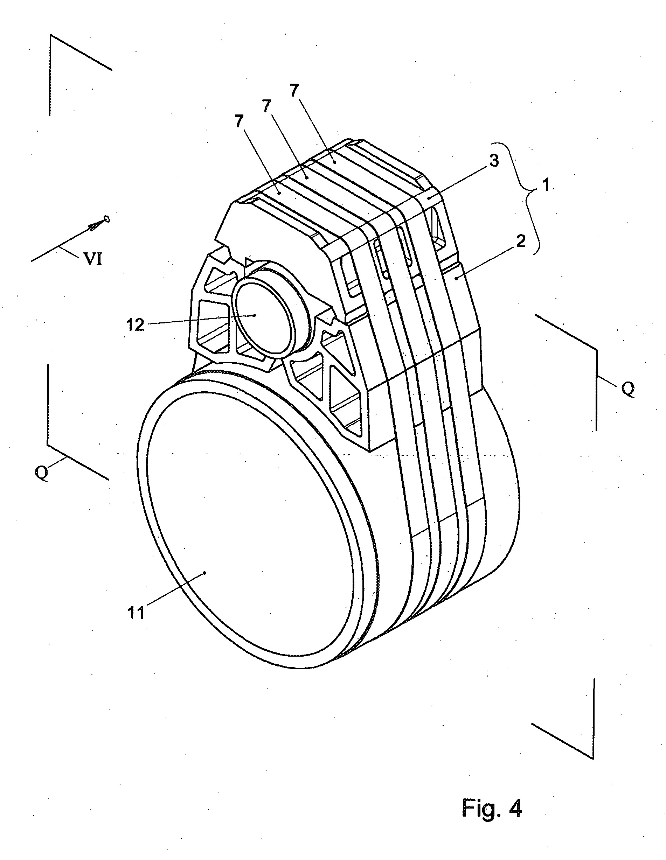

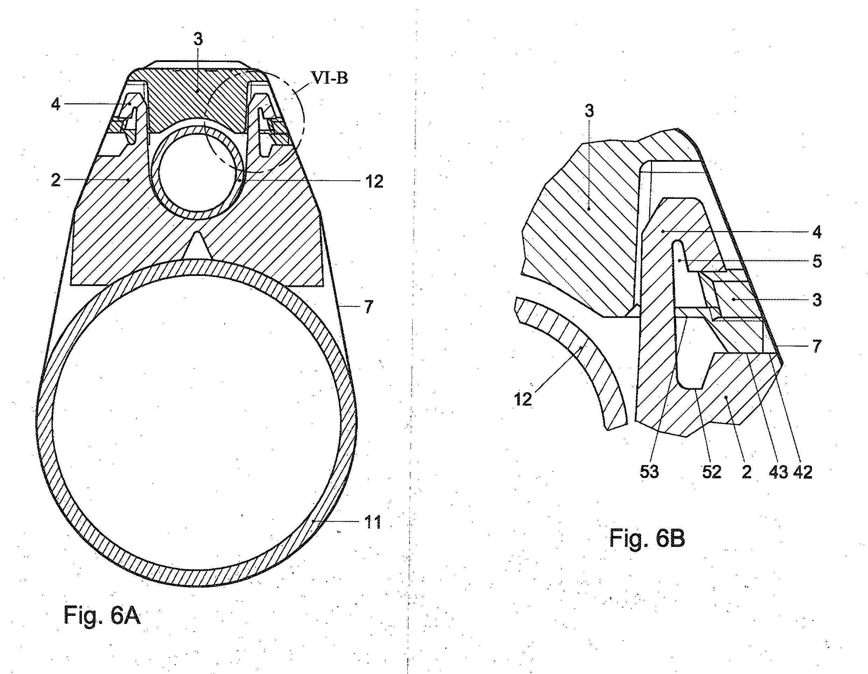

The assembly 1 shown is also designed to bring the covering element 3 in the covering condition, as desired, from two different placement conditions of the covering element 3 relative to the basic element 2. Of those placement conditions, Figures 4, 6A and 6B show the first placement condition. In the first placement condition and in the second placement condition, a first intermediate space between the second enveloping side 22 and the third enveloping side 23, and a second intermediate space between the second enveloping side 22 and the third enveloping side 23, respectively, are defined in a condition in which the covering element 3 abuts against the basic element 2 in the respective placement condition.. The first intermediate space in the first placement condition is greater than the second intermediate space in the second placement condition.

In the example shown, the possibility of bringing the covering element 3, as desired, from the two different placement conditions into the covering condition is realised in that a first outer surface structure 32 of the basic element 2 and a second outer surface structure 33 of the covering element 3 on sides of the basic element 2 and of the covering element 3 facing each other in the covering condition are each provided with at least one elevation 42, 43, respectively, and at least one recess 52, 53, respectively. Through different mutual orientations of the basic element 2 and the covering element 3, the first outer surface structure 32 and the second outer surface structure 33 can here, as desired, abut against each other in different manners in the covering condition, such that the elevation 42 of the first outer surface structure 32 abuts against the elevation 43 of the second outer surface structure 33, in which case the first placement condition of the covering element 3 occurs (see Figures 4, 6A and 6B), or the elevation 42 of the first outer surface structure 32 abuts against the recess 53 of the second outer surface structure 33, in which case the second placement condition of the covering element 3 occurs.

In the example shown, the two different mutual orientations of the basic element 2 and the covering element 3 are realised in that between the first placement condition and the second placement condition the two mutual orientations differ by 180 degrees from each other. The 180 degrees relate to a rotation indicated in Figures 2A and 2B with reference letter R about the line indicated in Figures 2A and 2B with reference letter L. The line L is a straight line which, viewed in the operative condition of the assembly 1, is perpendicular to the central axes of the first pipeline 11 and of the second pipeline 12 and intersects the two central axes in the middle of the assembly 1 taken in the longitudinal direction of the bundled pipeline.

As may be seen best in Figure 6B, in the first placement condition shown there, the covering element 3 can be pressed against the basic element 2 by the straps 7 without the covering element 3 thereby clamping against the second pipeline 12 shown there, because the elevations 43 of the second outer surface structure 33 of the covering element 3 abut against the elevations 42 of the first outer surface structure 23 of the basic element 2. Consequently, Figures 6A and 6B show a slit between the covering element 3 and the second pipeline 12. In the example shown of Figures 6A and 6B, the straps 7, if they are tightly tensioned, provide a firm fixation of the basic element 2 relative to the first pipeline 11, which firm fixation forms no hindrance to the axial movability of the second pipeline relative to the first pipeline 11.

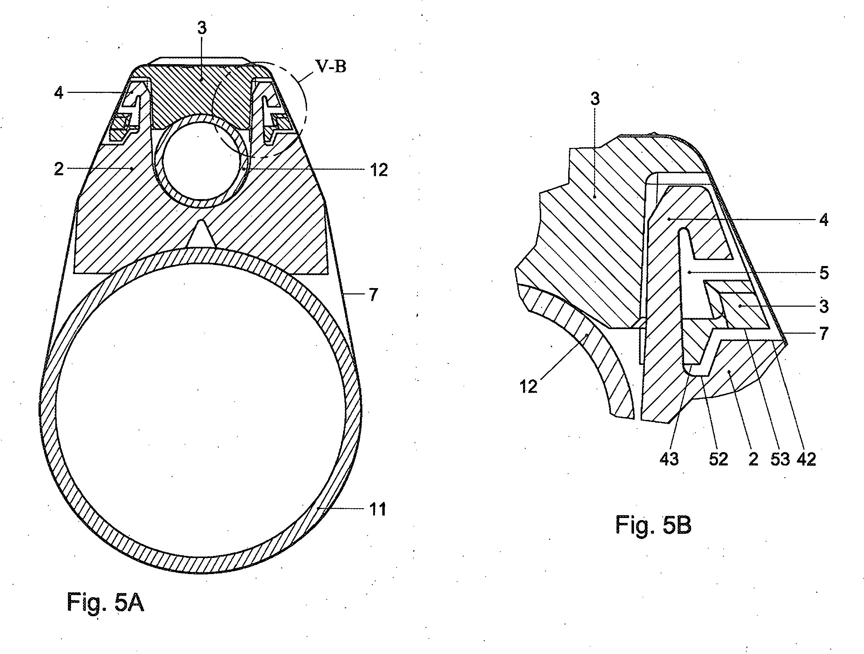

And as may be seen best in Fig. 5B, in the placement condition shown there, the covering element 3 can indeed be clampingly pressed onto the second pipeline shown there, because the elevations 43 of the second outer surface structure 33 of the covering element 3 are received in the recesses 52 of the first outer surface structure 32 of the basic element 2. Consequently, Fig. 5B shows that the covering element 3 abuts against the second pipeline 12. In the example of Figures 5A and 5B shown, the straps 7 provide the clamping force between the covering element 3 and the second pipeline 12.

It is noted that the above-mentioned examples of embodiments do not limit the invention and that within the scope of the accompanying claims, various alternatives are possible.

For instance, various variations are possible with regard to the shapes, dimensions and materials of the basic element and the covering element of the pipeline bundling assembly according to the invention. Also, an assembly according to the invention can be designed for holding more than two pipelines parallel at a distance from each other.

Further, it has been mentioned that with a snapped-tight covering element, a fastening strap need not necessarily run around the outside of a covering element in the covering condition. In fact, fastening strap only needs to be used for fixing the basic element relative to the first pipeline. Therefore, the basic element can comprise, if desired, special provisions for fixing thereto and/or leading therethrough one or more fastening straps.

Furthermore, the possibility of bringing the covering element, as desired, from at least two different placement conditions into the covering condition can be realised in various other ways than the manner described based on a 180° rotation difference in mutual orientations of the basic element and the covering element. For instance, the elevations and recesses of the first outer surface structure and of the second outer surface structure can be designed in various other manners, while the differences in mutual abutment of the elevations/recesses, to be set as desired, can also be obtained based on mutual translations (instead of mutual rotation) of the basic element and the covering element.

In the methods according to the invention the earlier-mentioned "placement under water" of pipelines comprises laying pipelines at least partly on and/or in the bottom of a water and/or placing pipelines at least partly vertically under water and/or placing pipelines at least partly under water at any random angle with respect to horizontal or vertical.

These and similar alternatives are understood to fall within the framework of the invention as defined in the appended claims.

## Claims

1. A pipeline bundling assembly for holding a first pipeline (11) and a second pipeline (12) parallel at a distance from each other,
comprising a basic element (2) and a covering element (3), which basic element comprises a first enveloping side (21) for partly enveloping the first pipeline in circumferential direction of the first pipeline, and a second enveloping side (22) located opposite the first enveloping side for partly enveloping the second pipeline in circumferential direction of the second pipeline, and which covering element comprises a third enveloping side (23) for partly enveloping the second pipeline in circumferential direction of the second pipeline, wherein the covering element (3) can be brought into a covering condition connected with the basic element (2) by interlocking therewith, in which covering condition the basic element and the covering element face each other by the second enveloping side (22) and the third enveloping side (23), respectively, and wherein the assembly (1) can take an operative condition, in which operative condition said first pipeline and said second pipeline are held parallel at a distance from each other in that the covering element is in said covering condition and the first pipeline is partly enveloped by the first enveloping side, and the second pipeline is partly enveloped by the second enveloping side and is partly enveloped by the third enveloping side,
wherein the basic element (2) and the covering element (3) comprise mutually cooperating snap connection elements (4, 5) for bringing the covering element in said covering condition by means of snap connection and maintaining the covering condition in said operative condition of the assembly (1),
**characterized in that** the assembly (1) is designed to permit the covering element (3) to be brought, as desired, from at least two different placement conditions of the covering element relative to the basic element (2), by means of said snap connection, into said covering condition, which is realised **in that** a first outer surface structure (32) of the basic element (2) and a second outer surface structure (33) of the covering element (3) on sides of the basic element and of the covering element facing each other in the covering condition are each provided with at least one elevation (42, 43) and at least one recess (52, 53), which first outer surface structure and second outer surface structure in said covering condition, through different mutual orientations of the basic element and the covering element, can, as desired, abut against each other in different manners such that:
- the elevation (42) of the first outer surface structure (32) abuts against the elevation (43) of the second outer surface structure (33), in which case a first placement condition of said placement conditions occurs, or
- the elevation (42) of the first outer surface structure (32) abuts against the recess (53) of the second outer surface structure (33), in which case a second placement condition of said placement conditions occurs,
wherein, in the first placement condition and in the second placement condition, respectively, a first intermediate space between the second enveloping side (22) and the third enveloping side (23), and a second intermediate space between the second enveloping side (22) and the third enveloping side (23) are defined in a condition in which the covering element (3) in the respective placement condition is pressed as far as possible in the direction towards the basic element (2) against the basic element (2), and wherein said first intermediate space in the first placement condition is greater than said second intermediate space in the second placement condition.

2. An assembly according to claim 1, wherein the mutual orientation of the basic element (2) and the covering element (3) in the first placement condition differs from this mutual orientation in the second placement condition at least by an angular displacement of 180 degrees about a straight line.

3. An assembly according to claim 1 or 2, wherein the assembly (1) has a ready for use condition in which the basic element (2) and the covering element (3) are completely separate from each other and wherein, starting from said ready for use condition, said covering condition can be obtained by merely putting said snap connection elements (4, 5) into operation.

4. An assembly according to any of the preceding claims, wherein the basic element (2) and/or the covering element (3) is/are manufactured from plastic.

5. An assembly according to any one of the preceding claims, wherein the snap connection elements (4, 5) comprise at least one local resilient portion (4) of the basic element manufactured integrally with the basic element (2), which resilient portion of the basic element, with respect to other portions of the basic element located next to the resilient portion of the basic element, functions as a local spring (4) and, by means of deformation occurring under its spring force, can be brought into the covering condition interlocking with the covering element.

6. An assembly according to claim 5, wherein the resilient portion (4) of the basic element (2) is manufactured from polyethylene (PE).

7. An assembly according to claim 6, wherein the resilient portion (4) of the basic element (2) is manufactured from Low Density Polyethylene (LDPE).

8. An assembly according to any one of the preceding claims, wherein the snap connection elements (4, 5) comprise at least one local resilient portion of the covering element manufactured integrally with the covering element (3), which resilient portion of the covering element, with respect to other portions of the covering element (3) located next to the resilient portion of the covering element, functions as a local spring and, by means of deformation occurring under its spring force, can be brought into the covering condition interlocking with the basic element (2).

9. An assembly according to claim 8, wherein the resilient portion of the covering element (3) is manufactured from polyethylene (PE).

10. An assembly according to claim 9, wherein the resilient portion of the covering element (3) is manufactured from Low Density Polyethylene (LDPE).

11. A mould assembly for manufacturing a pipeline bundling assembly (1) according to any one of the preceding claims, comprising a first mould and a second mould, which are especially designed for manufacturing the basic element (2) and the covering element (3), respectively, of the pipeline bundling assembly.

12. A method for placing under water, bundled parallel at a distance from each other, at least a first pipeline (11) and a second pipeline (12) with the aid of a plurality of pipeline bundling assemblies (1) according to any one of claims 1 to 10, comprising:
- bringing the pipeline bundling assemblies above water in their operative conditions with respect to the first pipeline and the second pipeline; and
- at least partly lowering under water the first pipeline, the second pipeline and the pipeline bundling assemblies brought into their operative conditions relative to the first pipeline and the second pipeline.

13. A method according to claim 12, wherein, in said bringing the pipeline bundling assemblies above water into their operative conditions, to at least one of the pipeline bundling assemblies at least one fastening strap (7) is applied, such that the applied fastening strap fixes at least the basic element (2) of the respective pipeline bundling assembly (1) with respect to the first pipeline (11).

14. A method according to claim 13, wherein the at least one fastening strap (7) is so applied that the applied fastening strap, which fixes the respective pipeline bundling assembly (1) with respect to the first pipeline (11), does not surround the second pipeline (12).

## Patentansprüche

1. Rohrleitungbündelungsanordnung, um eine erste Pipeline (11) und eine zweite Pipeline (12) parallel in einem Abstand voneinander zu halten,
umfassend ein Basiselement (2) und ein Abdeckungselement (3), wobei das Basiselement eine erste Ummantelungsseite (21), um die erste Pipeline in Umfangsrichtung der ersten Pipeline teilweise zu ummanteln, und eine zweite Ummantelungsseite (22) angeordnet gegenüber der ersten Ummantelungsseite, um die zweite Pipeline in Umfangsrichtung der zweiten Pipeline teilweise zu ummanteln, umfasst, und wobei das Abdeckungselement eine dritte Ummantelungsseite (23) umfasst, um die zweite Pipeline in Umfangsrichtung der zweiten Pipeline teilweise zu ummanteln, wobei das Abdeckungselement (3) in einen mit dem Basiselement (2) verbundenen Abdeckungszustand durch Ineinandergreifen damit gebracht werden kann, in welchem Abdeckungszustand das Basiselement und das Abdeckungselement einander jeweils durch die zweite Ummantelungsseite (22) und die dritte Ummantelungsseite (23) gegenüberliegen, und wobei die Anordnung (1) einen operativen Zustand annehmen kann, in dem die erste Pipeline und die zweite Pipeline dadurch in einem Abstand voneinander gehalten werden, dass das Abdeckungselement in dem Abdeckungszustand ist, und die erste Pipeline teilweise von der ersten Ummantelungsseite ummantelt ist, und die zweite Pipeline teilweise von der zweiten Ummantelungsseite ummantelt ist und teilweise von der dritten Ummantelungsseite ummantelt ist,
wobei das Basiselement (2) und das Abdeckungselement (3) zusammenarbeitende Schnappverbindungselemente (4, 5) umfassen, um das Abdeckungselement mittels Schnappverbindung in den Abdeckungszustand zu bringen und den Abdeckungszustand in dem operativen Zustand der Anordnung (1) zu halten,
**dadurch gekennzeichnet, dass** die Anordnung (1) konzipiert ist, um es zu ermöglichen, das Abdeckungselement (3) wie gewünscht von mindestens zwei Platzierungszuständen des Abdeckungselements zu dem Basiselement (2) mittels der Schnappverbindung in den Abdeckungszustand zu bringen, was bewerkstelligt wird, indem eine erste Außenflächenstruktur (32) des Basiselements (2) und eine zweite Außenflächenstruktur (33) des Abdeckungselements (3) an einander gegenüberliegenden Seiten des Basiselements und des Abdeckungselements im Abdeckungszustand jeweils mit mindestens einer Erhöhung (42, 43) und mindestens einer Vertiefung (52, 53) versehen sind, wobei die erste Außenflächenstruktur und die zweite Außenflächenstruktur in dem Abdeckungszustand durch unterschiedliche gegenseitige Ausrichtungen des Basiselements und des Abdeckungselements wie gewünscht auf verschiedene Weisen aneinander anstoßen können, sodass:
- die Erhöhung (42) der ersten Außenflächenstruktur (32) gegen die Erhöhung (43) der zweiten Außenflächenstruktur (33) anstößt, in welchem Fall ein erster Platzierungszustand der Platzierungszustände erfolgt, oder
- die Erhöhung (42) der ersten Außenflächenstruktur (32) gegen die Vertiefung (53) der zweiten Außenflächenstruktur (33) anstößt, in welchem Fall ein zweiter Platzierungszustand der Platzierungszustände erfolgt,
wobei im ersten Platzierungszustand und im zweiten Platzierungszustand jeweils ein erster Zwischenraum zwischen der zweiten Ummantelungsseite (22) und der dritten Ummantelungsseite (23) und ein zweiter Zwischenraum zwischen der zweiten Ummantelungsseite (22) und der dritten Ummantelungsseite (23) in einem Zustand definiert werden, in dem das Abdeckungselement (3) in dem jeweiligen Platzierungszustand so weit wie möglich in Richtung des Basiselements (2) gegen das Basiselement (2) gedrückt wird und wobei der erste Zwischenraum im ersten Platzierungszustand größer als der zweite Zwischenraum im zweiten Platzierungszustand ist.

2. Anordnung nach Anspruch 1, wobei die gegenseitige Ausrichtung des Basiselements (2) und des Abdeckungselements (3) im ersten Platzierungszustand sich von dieser gegenseitigen Ausrichtung im zweiten Platzierungszustand um mindestens eine Winkelverschiebung von 180 Grad um eine gerade Linie unterscheidet.

3. Anordnung nach Anspruch 1 oder 2, wobei die Anordnung (1) einen gebrauchsbereiten Zustand hat, in dem das Basiselement (2) und das Abdeckungselement (3) vollständig getrennt voneinander sind, und wobei, ausgehend von dem gebrauchsbereiten Zustand, der Abdeckungszustand einfach erhalten werden kann, indem die Schnappverbindungselemente (4, 5) in Betrieb gesetzt werden.

4. Anordnung nach einem der vorhergehenden Ansprüche, wobei das Basiselement (2) und/oder das Abdeckungselement (3) aus Kunststoff hergestellt ist/sind.

5. Anordnung nach einem der vorhergehenden Ansprüche, wobei die Schnappverbindungselemente (4, 5) mindestens einen lokalen federnden Abschnitt (4) des Basiselements umfassen, der integral mit dem Basiselement (2) hergestellt ist, welcher federnde Abschnitt des Basiselements in Bezug auf andere Abschnitte des Basiselements, angeordnet neben dem federnden Abschnitt des Basiselements, als eine lokale Feder (4) funktioniert und mittels der unter seiner Federkraft auftretenden Verformung in den mit dem Abdeckungselement ineinandergreifenden Abdeckungszustand gebracht werden kann.

6. Anordnung nach Anspruch 5, wobei der federnde Abschnitt (4) des Basiselements (2) aus Polyethylen (PE) hergestellt ist.

7. Anordnung nach Anspruch 6, wobei der federnde Abschnitt (4) des Basiselements (2) aus Polyethylen niedriger Dichte (LDPE, engl. Low Density Polyethylen) hergestellt ist.

8. Anordnung nach einem der vorhergehenden Ansprüche, wobei die Schnappverbindungselemente (4, 5) mindestens einen lokalen federnden Abschnitt des Abdeckungselements umfassen, der integral mit dem Abdeckungselement (3) hergestellt ist, welcher federnde Abschnitt des Abdeckungselements in Bezug auf andere Abschnitte des Abdeckungselements (3), angeordnet neben dem federnden Abschnitt des Abdeckungselements, als eine lokale Feder funktioniert und mittels der unter seiner Federkraft auftretenden Verformung in den mit dem Basiselement (2) ineinandergreifenden Abdeckungszustand gebracht werden kann.

9. Anordnung nach Anspruch 8, wobei der federnde Abschnitt des Abdeckungselements (3) aus Polyethylen (PE) hergestellt ist.

10. Anordnung nach Anspruch 9, wobei der federnde Abschnitt des Abdeckungselements (3) aus Polyethylen niedriger Dichte (LDPE, engl. Low Density Polyethylen) hergestellt ist.

11. Formanordnung zur Herstellung einer Rohrleitungbündelungsanordnung (1) nach einem der vorhergehenden Ansprüche, umfassend eine erste Form und eine zweite Form, die speziell konzipiert sind zur Herstellung des Basiselements (2) bzw. des Abdeckungselements (3) der Rohrleitungbündelungsanordnung.

12. Verfahren, um gebündelt parallel in einem Abstand voneinander, mindestens eine erste Pipeline (11) und eine zweite Pipeline (12) mithilfe einer Vielzahl von Rohrleitungbündelungsanordnungen (1) nach einem der Ansprüche 1 bis 10 unter Wasser zu platzieren, umfassend:
- dass die Rohrleitungbündelungsanordnungen über Wasser in ihren operativen Zustand in Bezug auf die erste Rohrleitung und die zweite Rohrleitung gebracht werden; und
- dass die erste Rohrleitung, die zweite Rohrleitung und die Rohrleitungbündelungsanordnungen, die in ihren operativen Zustand in Bezug auf die erste Rohrleitung und die zweite Rohrleitung gebracht sind, mindestens teilweise unter Wasser gesenkt werden.

13. Verfahren nach Anspruch 12, wobei, wenn die Rohrleitungbündelungsanordnungen über Wasser in ihren operativen Zustand gebracht werden, an mindestens einer der Rohrleitungbündelungsanordnungen mindestens ein Befestigungsgurt (7) angebracht wird, sodass der angebrachte Befestigungsgurt mindestens das Basiselement (2) der jeweiligen Rohrleitungbündelungsanordnung (1) in Bezug auf die erste Rohrleitung (11) fixiert.

14. Verfahren nach Anspruch 13, wobei der mindestens eine Befestigungsgurt (7) so angebracht wird, dass der angebrachte Befestigungsgurt, der die jeweilige Rohrleitungbündelungsanordnung (1) in Bezug auf die erste Rohrleitung (11) fixiert, die zweite Rohrleitung (12) nicht umschließt.

## Revendications

1. Ensemble de regroupement de pipelines pour maintenir un premier pipeline (11) et un second pipeline (12) parallèles, à une distance l'un de l'autre,
comprenant un élément de base (2) et un élément de recouvrement (3), lequel élément de base comprend un premier côté d'enveloppement (21) pour envelopper partiellement le premier pipeline dans une direction circonférentielle du premier pipeline, et un deuxième côté d'enveloppement (22) opposé au premier coté d'enveloppement pour envelopper partiellement le second pipeline dans une direction circonférentielle du second pipeline, et lequel élément de recouvrement comprend un troisième côté d'enveloppement (23) pour envelopper partiellement le second pipeline dans une direction circonférentielle du second pipeline, dans lequel l'élément de recouvrement (3) peut être amené dans un état de recouvrement relié à l'élément de base (2) par verrouillage mutuel avec celui-ci, état de recouvrement dans lequel l'élément de base et l'élément de recouvrement sont en vis-à-vis l'un de l'autre par le deuxième côté d'enveloppement (22) et le troisième côté d'enveloppement (23), respectivement, et dans lequel l'ensemble (1) peut prendre un état fonctionnel, état fonctionnel dans lequel le premier pipeline et le second pipeline sont maintenus parallèles à distance l'un de l'autre en ce sens que l'élément de recouvrement est dans l'état de recouvrement et le premier pipeline est partiellement enveloppé par le premier côté d'enveloppement, et le second pipeline est partiellement enveloppé par le deuxième côté d'enveloppement et est partiellement enveloppé par le troisième côté d'enveloppement,
dans lequel l'élément de base (2) et l'élément de recouvrement (3) comprennent des éléments de liaison par encliquetage coopérant mutuellement (4, 5) pour amener l'élément de recouvrement dans l'état de recouvrement par l'intermédiaire d'une liaison par encliquetage et maintenir l'état de recouvrement dans l'état opérationnel de l'ensemble (1),
**caractérisé en ce que** l'ensemble (1) est conçu pour permettre d'amener l'élément de recouvrement (3), comme voulu, à partir d'au moins deux états de positionnement différents de l'élément de recouvrement par rapport à l'élément de base (2), par l'intermédiaire de la liaison par encliquetage, dans un état de recouvrement, qui est réalisé en ce sens qu'une première structure de surface extérieure (32) de l'élément de base (2) et une seconde structure de surface extérieure (33) de l'élément de recouvrement (3) sur des côtés de l'élément de base et de l'élément de recouvrement situés en vis-à-vis l'un de l'autre dans l'état de recouvrement sont chacune munies d'au moins un relief (42, 43) et d'au moins un évidement (52, 53), lesquelles première structure de surface extérieure et seconde structure de surface extérieure dans l'état de recouvrement, par l'intermédiaire d'orientations mutuelles différentes de l'élément de base et de l'élément de recouvrement peuvent, comme voulu, venir en butée l'une contre l'autre de différentes manières de telle sorte que :
- le relief (42) de la première structure de surface extérieure (32) vient en butée contre le relief (43) de la seconde structure de surface extérieure (33), auquel cas un premier état de positionnement des états de positionnement a lieu, ou,
- le relief (42) de la première structure de surface extérieure (32) vient en butée contre l'évidement (53) de la seconde structure de surface extérieure (33), auquel cas un second état de positionnement parmi les états de conditionnement a lieu,
dans lequel, dans le premier état de positionnement et dans le second état de positionnement, respectivement, un premier espace intermédiaire entre le deuxième côté d'enveloppement (22) et le troisième côté d'enveloppement (23), et un second espace intermédiaire entre le deuxième côté d'enveloppement (22) et le troisième côté d'enveloppement (23) sont définis dans un état dans lequel l'élément de recouvrement (3) dans l'état de positionnement respectif est poussé autant que possible dans la direction vers l'élément de base (2) contre l'élément de base (2) et dans lequel le premier espace intermédiaire dans le premier état de positionnement est plus grand que le second espace intermédiaire dans le second état de positionnement.

2. Ensemble selon la revendication 1, dans lequel l'orientation mutuelle de l'élément de base (2) et de l'élément de recouvrement (3) dans le premier état de positionnement diffère de cette orientation mutuelle dans le second état de positionnement d'au moins un déplacement angulaire de 180° autour d'une ligne droite.

3. Ensemble selon les revendications 1 ou 2, dans lequel l'ensemble (1) a un état prêt à l'utilisation dans lequel l'élément de base (2) et l'élément de recouvrement (3) sont complètement séparés l'un de l'autre et dans lequel, en démarrant de cet état prêt à l'utilisation, l'état de recouvrement peut être obtenu en mettant simplement les éléments de liaison par encliquetage (4, 5) en action.

4. Ensemble selon l'une quelconque des revendications précédentes, dans lequel l'élément de base (2) et/ou l'élément de recouvrement (3) est/sont fabriqué(s) à partir d'une matière plastique

5. Ensemble selon l'une quelconque des revendications précédentes, dans lequel les éléments de liaison par encliquetage (4, 5) comprennent au moins une partie élastique locale (4) de l'élément de base, fabriquée d'un seul tenant avec l'élément de base (2), laquelle partie élastique de l'élément de base, par rapport aux autres parties de l'élément de base situées à proximité de la partie élastique de l'élément de base, agit comme un ressort local (4), par l'intermédiaire d'une déformation ayant lieu sous sa force de ressort, peut être amenée dans l'état de recouvrement en étant mutuellement verrouillée avec l'élément de recouvrement.

6. Ensemble selon la revendication 5, dans lequel la partie élastique (4) de l'élément de base (2) est fabriquée à partir de polyéthylène (PE).

7. Ensemble selon la revendication 6, dans lequel la partie élastique (4) de l'élément de base (2) est fabriquée à partir de polyéthylène basse densité (LDPE).

8. Ensemble selon l'une quelconque des revendications précédentes, dans lequel les éléments de liaison par encliquetage (4, 5) comprennent au moins une partie élastique locale de l'élément de recouvrement fabriquée d'un seul tenant avec l'élément de recouvrement (3), laquelle partie élastique de l'élément de recouvrement, par rapport aux autres parties de l'élément de recouvrement (3) situées à proximité de la partie élastique de l'élément de recouvrement, agit comme un ressort local et, par l'intermédiaire d'une déformation ayant lieu sous sa force de ressort, peut être amenée dans l'état de recouvrement en étant mutuellement verrouillée avec l'élément de base (2).

9. Ensemble selon la revendication 8, dans lequel la partie élastique de l'élément de recouvrement (3) est fabriquée à partir de polyéthylène (PE).

10. Ensemble selon la revendication 9, dans lequel la partie élastique de l'élément de recouvrement (3) est fabriquée à partir de polyéthylène basse densité (LDPE).

11. Ensemble de moules pour fabriquer un ensemble de regroupement de pipelines (1) selon l'une quelconque des revendications précédentes, comprenant un premier moule et un second moule, qui sont particulièrement conçus pour fabriquer l'élément de base (2) et l'élément de recouvrement (3), respectivement, de l'ensemble de regroupement de pipelines.

12. Procédé pour mettre sous l'eau, regroupés parallèlement à une distance l'un de l'autre, au moins un premier pipeline (11) et un second pipeline (12) à l'aide de plusieurs ensembles de regroupement de pipelines (1) selon l'une quelconque des revendications 1 à 10, consistant à :
- amener les ensembles de regroupement de pipelines, au-dessus de l'eau, dans leurs états opérationnels par rapport au premier pipeline et au second pipeline ; et
- abaisser au moins partiellement sous l'eau le premier pipeline, le second pipeline et les ensembles de regroupement de pipelines amenés dans leurs états fonctionnels par rapport au premier pipeline et au second pipeline.

13. Procédé selon la revendication 12, dans lequel, dans cette amenée des ensembles de regroupement de pipelines au-dessus de l'eau dans leurs états fonctionnels, sur au moins un des ensembles de regroupement de pipelines est appliquée au moins une sangle de fixation (7), de sorte que la sangle de fixation appliquée fixe au moins l'élément de base (2) de l'ensemble de regroupement de pipelines respectif (1) par rapport au premier pipeline (11).

14. Procédé selon la revendication 13, dans lequel la au moins une sangle de fixation (7) est appliquée de sorte que la sangle de fixation appliquée, qui fixe l'ensemble de regroupement de pipelines respectif (1) par rapport au premier pipeline (11) n'entoure pas le second pipeline (12).
